# EUROPÄISCHE PATENTSCHRIFT

(11) **EP 3 743 640 B1**
(45) Veröffentlichungstag und Bekanntmachung des Hinweises auf die Patenterteilung: **06.04.2022**
(21) Anmeldenummer: 18830405.9
(22) Anmeldetag: 11.12.2018
(51) Int. Cl.: F16F 15/14

(54) **TILGERSYSTEM**
ABSORBER SYSTEM
SYSTÈME D'AMORTISSEMENT

(30) Priorität: 26.01.2018 DE 102018201199
(43) Veröffentlichungstag der Anmeldung: 02.12.2020
(73) Patentinhaber: ZF Friedrichshafen AG, 88046 Friedrichshafen (DE)
(72) Erfinder: SIEMENS, Kyrill, 97084 Würzburg (DE); DONG, Zhaoyuan, Jiuting Town Songjiang Distric 201615 (CN); FISCHER, Reinhold, 96528 Frankenblick (DE)
(86) Internationale Anmeldenummer: PCT/EP2018/084295
(87) Internationale Veröffentlichungsnummer: WO 2019/145084

(56) Entgegenhaltungen:
- EP-A1- 3 222 876
- WO-A2-2011/147632
- DE-A1-102013 204 711
- DE-A1-102015 225 635

## Beschreibung

Die Erfindung betrifft ein Tilgersystem mit einem Tilgermassenträger, an welchem zumindest eine Tilgermasse mittels Koppeleinrichtungen, welche Führungsbahnen im Tilgermassenträger mit Führungsbahnen in der zumindest einen Tilgermasse verbinden, relativ bewegbar aufgenommen ist, sowie mit wenigstens einem Anschlag, wobei die zumindest eine Tilgermasse radial außerhalb des Anschlags angeordnet ist, und an ihrer dem Anschlag zugewandten Radialseite mit einem Kontaktbereich versehen ist, der mit einem am Anschlag an dessen der zumindest einen Tilgermasse zugeordneten Radialseite vorgesehenen Profilbereich zusammenwirkt.

Dabei zeigen die Dokumente DE 10 2013 204711 A1, EP 3 22 876 A1 und DE 10 2015 225635 A1 jeweils Tilgersysteme der beschriebenen Art, insbesondere zeigt das Dokument DE 10 2013 204711 A1 ein Tilgersystem mit den Merkmalen des Oberbegriffs des Anspruchs 1.

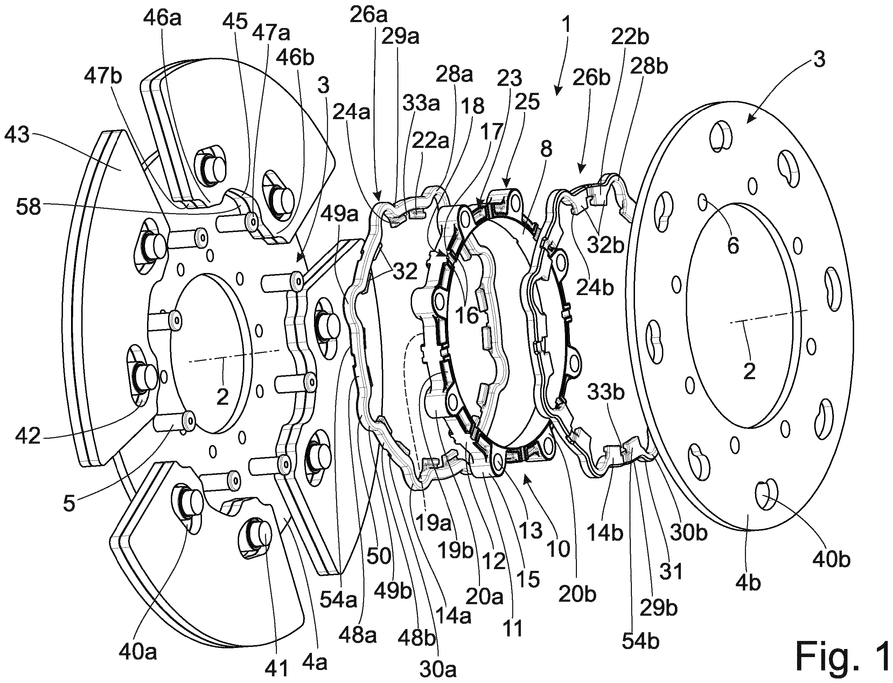

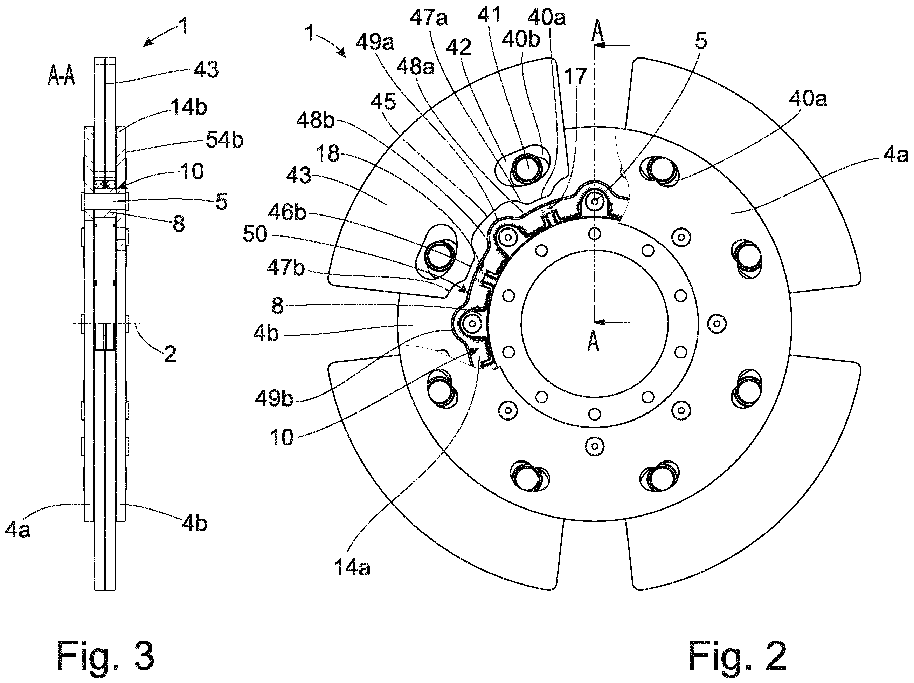

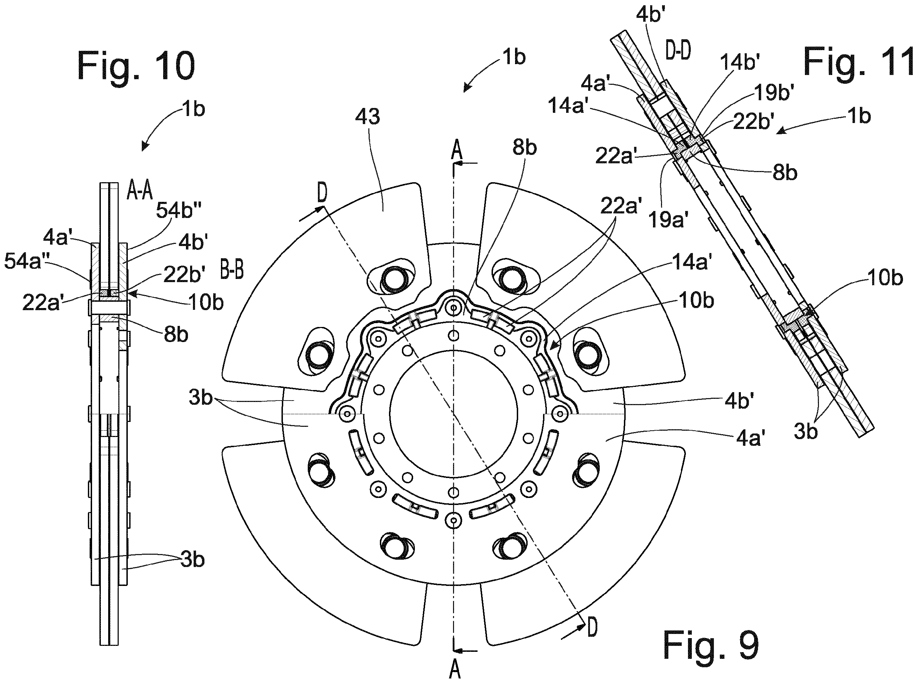

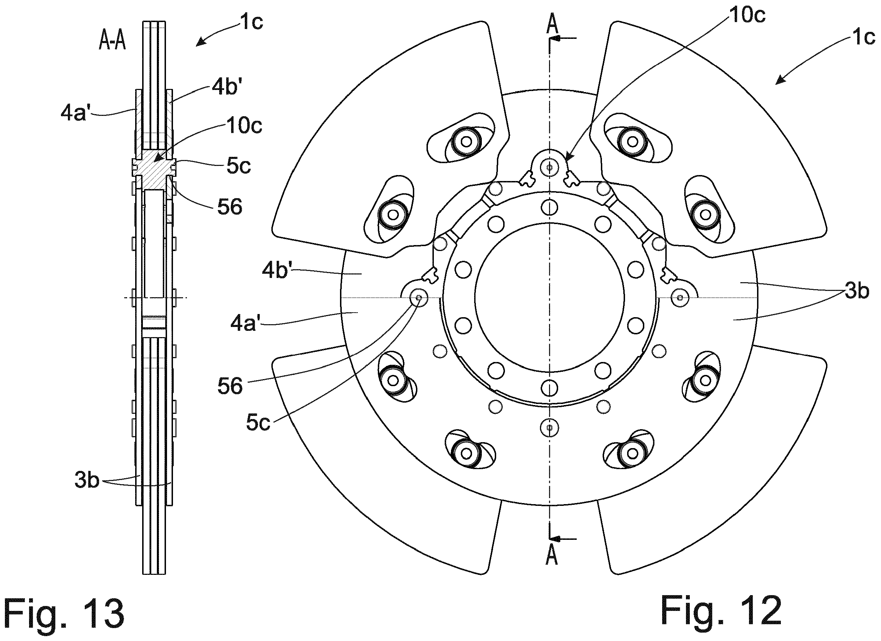

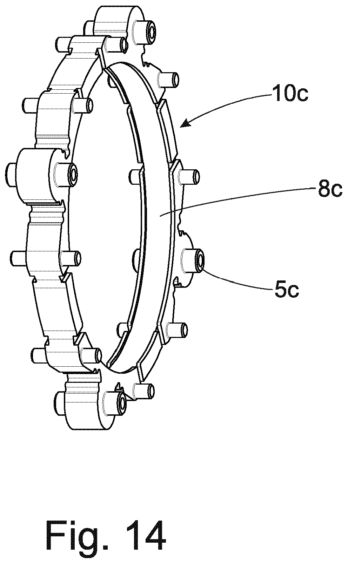

Ein derartiges Tilgersystem ist auch aus der WO 2011/147632 A2 bekannt. Wie beispielsweise in Fig. 1 erkennbar, ist das Tilgersystem mit einem Tilgermassenträger versehen, der zwei mit Axialabstand zueinander angeordnete Tilgermassenträgerelemente aufweist, wobei zapfenförmige Abstandshalter die beiden Tilgermassenträgerelemente auf dem vorbestimmten Axialabstand halten. Axial zwischen den beiden Tilgermassenträgerelementen sind, wie beispielsweise Fig. 2 zeigt, Tilgermassen angeordnet, die ebenso wie die Tilgermassenträgerelemente über Führungsbahnen verfügen, wobei walzenförmige Koppeleinrichtungen jeweils zur Verbindung von Führungsbahnen des Tilgermassenträgers mit einer Führungsbahn einer Tilgermasse dienen, um der Tilgermasse eine Relativbewegbarkeit gegenüber dem Tilgermassenträger zu sichern. Wie Fig. 3 zeigt, befindet sich radial innerhalb der Tilgermassen ein ringförmiger Anschlag, der in den Fig. 13 und 14 als Einzelheit herausgezeichnet ist. Dieser Anschlag verfügt über einen Anschlagträger, der mit einer als Anschlagdämpfer wirksamen elastischen Umhüllung umkleidet ist. Die radiale Außenseite dieser Umhüllung ist als Profilbereich des Anschlags wirksam, der mit den an den radialen Innenseiten der Tilgermassen vorgesehenen Kontaktbereichen zusammenwirkt. Als Kontaktbereich der Tilgermassen wirken die in Fig. 10 gezeigten umfangsseitig mittigen Krümmungsbereiche, während sich daran umfangsseitig anschließende Axialfreistellungen dafür sorgen, dass eine Kontaktaufnahme der Tilgermassen mit Axialausdrückungen, die an zumindest einem Tilgermassenträgerelement im Aufnahmebereich der Abstandshalter ausgebildet sind, vermieden wird.

Es kann nicht ausgeschlossen werden, dass die als Anschlagdämpfer wirksame elastische Umhüllung sich unter Fliehkrafteinwirkung in Bezug zu dem an einem der Tilgermassenträgerelemente befestigten Anschlagträger aufweitet, und dadurch die gewünschten Dämpfungseigenschaften zumindest bei höheren Drehzahlen eingeschränkt sein könnten. Darüber hinaus kann nicht ausgeschlossen werden, dass die elastische Umhüllung hierbei überdehnt wird, was sich dauerhaft nachteilig auf das Dämpfungsverhalten auswirken kann.

Der Erfindung liegt die Aufgabe zugrunde, einen Anschlag für ein Tilgersystem derart auszubilden, dass dieses unabhängig von der jeweiligen Fliehkrafteinwirkung stets seine vorteilhaften Dämpfungseigenschaften beibehält.

Zur Lösung dieser Aufgabenstellung ist ein Tilgersystem vorgesehen mit einem Tilgermassenträger, an welchem zumindest eine Tilgermasse mittels Koppeleinrichtungen, welche Führungsbahnen im Tilgermassenträger mit Führungsbahnen in der zumindest einen Tilgermasse verbinden, relativ bewegbar aufgenommen ist, sowie mit wenigstens einem Anschlag, wobei die zumindest eine Tilgermasse radial außerhalb des Anschlags angeordnet ist, und an ihrer dem Anschlag zugewandten Radialseite mit einem Kontaktbereich versehen ist, der mit einem am Anschlag an dessen der zumindest einen Tilgermasse zugeordneten Radialseite vorgesehenen Profilbereich zusammenwirkt.

Von besonderer Bedeutung hierbei ist, dass der Anschlag wenigstens einen Anschlagträger als erste Baueinheit und zumindest einen über eine Radialsicherung mit dem Anschlagträger verbundenen Anschlagdämpfer als zweite Baueinheit aufweist, wobei der Radialsicherung jeweils eine Druckmittelversorgung zugeordnet ist, die mit jeweils einer der Koppeleinrichtungen zusammenwirkt.

Insbesondere dann, wenn der wenigstens eine Anschlagträger aus einem zumindest im Wesentlichen verformungsstabilen Material, wie beispielsweise aus einem metallischen Material, wie Spritzguss, besteht, kommt dem Anschlag eine hohe Verformungssteifigkeit zu. Der zumindest eine Anschlagdämpfer wird dann, wenn er aus einem zumindest im Wesentlichen verformungsfreudigen Material, wie einem Kunststoff, besteht, hervorragende Dämpfungseigenschaften erbringen, und wird trotzdem, da er mittels einer Radialsicherung mit dem Anschlagträger verbunden ist, von der Verformungssteifigkeit des Anschlagträgers profitieren, indem er auch unter Fliehkrafteinfluss seine Form zumindest im Wesentlichen beibehält. Dies gilt insbesondere dann, wenn sowohl der wenigstens eine Anschlagträger als auch der zumindest eine Anschlagdämpfer des Anschlages jeweils ringförmig ausgebildet ist. Zudem kann der Anschlagträger aufgrund seiner hohen Verformungssteifigkeit als Abstandshalter genutzt werden. Dies kann insbesondere dann von Vorteil sein, wenn der Anschlag axial zwischen zwei mit Achsversatz angeordneten Tilgermassenträgerelementen des Tilgermassenträgers vorgesehen ist. Andere Abstandshalter sind dann entbehrlich.

Der Radialsicherung kommt also bei dem Anschlag des Tilgersystems eine besondere Bedeutung zu. Eine vorteilhafte Radialsicherung liegt vor, wenn eine von mehreren Baueinheiten, also entweder der Anschlagdämpfer oder der Anschlagträger des Anschlags oder der Tilgermassenträger, wenigstens einen Vorsprung mit von der Radialrichtung abweichender Erstreckungsrichtung aufweist, der in eine entsprechend geformte Ausnehmung einer der anderen Baueinheiten eingreift, wobei der Vorsprung ebenso wie die Ausnehmung jeweils Bestandteile der Radialsicherung bilden. Durch Eingriff des Vorsprunges der einen Baueinheit in die entsprechende Ausnehmung der jeweils anderen Baueinheit besteht eine formschlüssige Verbindung der beiden Baueinheiten, was zu der gewünschten Formbeständigkeit des Anschlagdämpfers führt.

Der Vorsprung kann an der als Anschlagdämpfer oder als Anschlagträger wirksamen Baueinheit vorgesehen sein, und die Ausnehmung an der anderen als Anschlagdämpfer oder als Anschlagträger wirksamen Baueinheit. Ebenso kann der Vorsprung aber auch an der als Anschlagdämpfer des Anschlags oder an der als Tilgermassenträger wirksamen Baueinheit vorgesehen sein, und die Ausnehmung an der anderen als Anschlagdämpfer oder als Tilgermassenträger wirksamen Baueinheit. In jedem Fall dringt der Vorsprung mit einem der Ausnehmung zugewandten freien Ende in die zugeordnete Ausnehmung ein.

Von besonderer Bedeutung ist, dass der Radialsicherung jeweils eine Druckmittelversorgung zugeordnet ist, die mit jeweils einer der Koppeleinrichtungen zusammen wirkt. Der Sinn dieser Druckmittelversorgung liegt in der Zuführung von Druckmittel unmittelbar zur jeweiligen Koppeleinrichtung, um durch die dort bewirkte Schmierwirkung für eine Reibungsminimierung zu sorgen. Dies ist insbesondere bei starken Relativdrehauslenkungen der Tilgermassen relativ zum Tilgermassenträger und damit zum Anschlag der Fall. In vorteilhafter konstruktiver Ausführung weist die Radialsicherung pro Koppeleinrichtung ein Vorsprungpaar auf, das in Umfangsrichtung zwischen sich über einen auf die zugeordnete Koppelvorrichtung weisenden und als Druckmittelversorgung dienenden Druckmittelkanal verfügt. Dadurch ergibt sich nicht nur eine kompakte Ausführung von Radialsicherung und Druckmittelversorgung, sondern darüber hinaus auch die Anordnung sowohl der Vorsprünge der Radialsicherung als auch des jeweiligen Druckmittelkanals der Druckmittelversorgung im umfangsseitigen Erstreckungsbereich der jeweiligen Koppeleinrichtung.

Der Anschlagdämpfer ist durch die Radialsicherung zwar in Radialrichtung gegenüber dem Anschlagträger gesichert, bedarf aber auch in Achsrichtung einer Sicherung in Bezug zu dem Anschlagträger. Um diese Sicherung auf besonders einfache Weise zu realisieren, kann vorgesehen sein, den wenigstens einen Anschlagträger an dem Tilgermassenträger zu befestigen, und den zumindest einen Anschlagdämpfer mittels des wenigstens einen Anschlagträgers axial zwischen dem Tilgermassenträger und dem Anschlagträger zu halten. Diese Lösung ist insbesondere dann vorteilhaft, wenn ein Tilgermassenträger Verwendung findet, der über zumindest zwei mit Axialversatz zueinander angeordnete Tilgermassenträgerelemente verfügt, die axial zwischen sich den Anschlag aufnehmen. Bei einer derartigen Ausführung können dem wenigstens einen Anschlagträger zumindest zwei Anschlagdämpfer zugeordnet sein, von denen jeder axial zwischen je einem der Tilgermassenträger und dem Anschlagträger gehalten ist.

Zur Befestigung des wenigstens einen Anschlagträgers an dem Tilgermassenträger verfügt der wenigstens eine Anschlagträger über zumindest einen Befestigungsbereich, der zur lösbaren Aufnahme oder zur festen Aufnahme wenigstens eines Befestigungsmittels dienen kann. Im erstgenannten Fall durchdringen Bauteile, wie Abstandshalter, Öffnungen im Befestigungsbereich des Anschlagträgers, ohne gegenüber diesen Öffnungen fest zu sein, während diese Bauteile im letztgenannten Fall gegenüber diesen Öffnungen fest sind, beispielsweise aufgrund einer kraftschlüssigen oder materialschlüssigen Verbindung.

Bei Ausgestaltung des Anschlagträgers mit zumindest einem Befestigungsbereich ist der zumindest eine Anschlagdämpfer mit wenigstens einem an den zumindest einen Befestigungsbereich des Anschlagträgers formlich angepassten Anschlagdämpferbereich versehen, welcher den zumindest einen Befestigungsbereich des Anschlagträgers vom Kontaktbereich der zugeordneten Tilgermasse trennt. Die Fixierung des Anschlages am Tilgermassenträger erfolgt dadurch im gleichen Umfangsbereich wie die Anordnung des entsprechenden Anschlagdämpferbereichs, so dass eventuelle Momente der Tilgermassen zumindest im Wesentlichen frei von einem Hebelarm am Anschlagdämpfer aufgenommen werden können.

Wie bereits erläutert, weist die zumindest eine Tilgermasse an ihrer dem Anschlag zugewandten Radialseite einen Kontaktbereich auf, und der Anschlag an seiner der zumindest einen Tilgermasse zugewandten Radialseite einen Profilbereich. Der Kontaktbereich der zumindest einen Tilgermasse verfügt in Umfangsrichtung über eine Kontaktzone oder über eine Mehrzahl von Kontaktzonen, und auch der Profilbereich des Anschlags ist mit einer Profilzone oder mit einer Mehrzahl von Profilzonen versehen. Während die eine Kontaktzone oder die jeweils erste Kontaktzone des Kontaktbereiches an der radialen Innenseite der jeweiligen Tilgermasse und die eine Profilzone oder die jeweils erste Profilzone des Profilbereiches an der radialen Außenseite des Dämpfers realisiert ist, befindet sich eine zumindest zweite Kontaktzone des Kontaktbereiches in Umfangsrichtung benachbart zur ersten Kontaktzone an der radialen Innenseite der jeweiligen Tilgermasse, während eine zumindest zweite Profilzone des Profilbereiches jeweils durch den einem Befestigungsbereich des Anschlagträgers formlich angepassten Anschlagdämpferbereich des Anschlagdämpfers gebildet wird.

Lediglich eine Kontaktzone an der Tilgermasse oder deren erste Kontaktzone sowie lediglich eine Profilzone am Dämpfer kann genügen, wenn unmittelbar nach dem Starten eines Antriebs, wie einer Brennkraftmaschine, Drehzahlen dicht oberhalb des Leerlaufs anliegen, beispielsweise beim Kriechbetrieb des entsprechenden Fahrzeuges. Zwar sind dann die übertragenen Momente noch nicht allzu hoch, können aber mit hohen Drehungleichförmigkeiten beaufschlagt sein. Während diese Drehungleichförmigkeiten zu vergleichsweise starken Relativauslenkungen der zumindest einen Tilgermasse in Umfangsrichtung führen, kann die der geringen Drehzahl zugeordnete Fliehkraft für eine komplette Auslenkung der zumindest einen Tilgermasse in Radialrichtung ungenügend sein, und dementsprechend lediglich ein geringes Rückstellmoment für die zumindest eine Tilgermasse in deren Ausgangsposition bereitstellen. Diese Ausgangsposition würde die zumindest eine Tilgermasse bei völligem Entfall von Drehungleichförmigkeiten einnehmen.

Fällt die zumindest eine Tilgermasse dagegen beim Abschalten des Antriebs aufgrund der Gewichtskraft bei zusammenbrechender Fliehkraft nach unten, oder sind die vom Antrieb erzeugten Drehungleichförmigkeiten so hoch, dass lediglich eine Kontaktzone an der Tilgermasse oder lediglich eine Profilzone am Anschlagdämpfer nicht genügt, dann wird es zumindest sinnvoll, wenn nicht gar notwendig sein, zumindest eine zweite Kontaktzone des Kontaktbereiches in Umfangsrichtung ergänzend zur bereits erwähnten Kontaktzone an der radialen Innenseite der jeweiligen Tilgermasse vorzusehen, und auch zumindest eine zweite Profilzone für den Profilbereich. Bei einer derartigen Ausführung kann die zumindest eine Tilgermasse auch bei großen vom Antrieb erzeugten Drehungleichförmigkeiten zum Stillstand gebracht werden, bevor es zu einem Kontakt zwischen der Koppeleinrichtung und zumindest einer der Führungsbahnen in der zumindest einen Tilgermasse und dem Tilgermassenträger kommt. Wird die zweite Profilzone des Profilbereiches jeweils durch den einem Befestigungsbereich des Anschlagträgers formlich angepassten Anschlagdämpferbereich des Anschlagdämpfers gebildet, dann kann die Wirkung dieser zweiten Profilzone ohne besonderen konstruktiven Aufwand und ohne den Bedarf zusätzlicher Bauteile genutzt werden.

Nachfolgend sind Ausführungsbeispiele für einen Anschlag eines Tilgersystems angegeben. Es zeigt:
- Fig. 1: Ein Tilgersystem mit einem Tilgermassenträger, der über mit Axialabstand angeordnete Tilgermassenträgerelemente und axial zwischen denselben vorgesehene Tilgermassen sowie, radial innerhalb derselben, über einen Anschlag verfügt, wobei der Anschlag einen an den Tilgermassenträgerelementen aufgenommenen Anschlagträger und axial beidseits des Anschlagträgers vorgesehene, am Anschlagträger aufgenommene Anschlagdämpfer aufweist;
- Fig. 2: eine Draufsicht auf das Tilgersystem mit Anordnung der Tilgermassen in ihrer Ausgangsposition;;
- Fig. 3: einen Schnitt durch das Tilgersystem gemäß der Schnittlinie A - A in Fig. 2;
- Fig. 4: wie Fig. 2, aber mit Auslenkung der Tilgermassen um 46° gegenüber der Ausgangsposition;
- Fig. 5: wie Fig. 2, aber mit Auslenkung der Tilgermassen um 54° gegenüber der Ausgangsposition;
- Fig. 6: wie Fig. 2, aber mit Auslenkung der Tilgermassen um 60° gegenüber der Ausgangsposition;
- Fig. 7: wie Fig. 1, aber mit einem Anschlagträger, der lediglich an einer Axialseite einen Anschlagdämpfer aufweist;
- Fig. 8: wie Fig. 1, aber mit Aufnahme des Anschlagdämpfers am Tilgermassenträger;
- Fig. 9: wie Fig. 2, aber mit Aufnahme des Anschlagdämpfers am Tilgermassenträger;
- Fig. 10: einen Schnitt durch das Tilgersystem gemäß der Schnittlinie A - A in Fig. 9;
- Fig. 11: einen Schnitt durch das Tilgersystem gemäß der Schnittlinie D - D in Fig. 9;
- Fig. 12: wie Fig. 2, aber mit fester Aufnahme von Befestigungselementen am Anschlagträger;
- Fig. 13: einen Schnitt durch das Tilgersystem gemäß der Schnittlinie A - A in Fig. 12;
- Fig. 14: eine Herauszeichnung vom Anschlagträger des Tilgersystems der Fig. 12 und 13 in räumlicher Darstellung;
- Fig. 15: wie Fig. 9, aber mit Ausbildung der Tilgermassen mit einer anderen radialen Innenseite, wobei die Tilgermassen ihre Ausgangsposition einnehmen,
- Fig. 16: wie Fig. 15, aber mit Auslenkung der Tilgermassen um 39° gegenüber der Ausgangsposition;
- Fig. 17: wie Fig. 15, aber mit Auslenkung der Tilgermassen um 44° gegenüber der Ausgangsposition;
- Fig. 18: wie Fig. 15, aber mit Auslenkung der Tilgermassen um 49° gegenüber der Ausgangsposition;
- Fig. 19: einen Einbau des Tilgersystems in ein Getriebe in Kombination mit Torsionsschwingungsdämpfern, einer Elektromaschine und eines Kupplungssystems.

Fig. 1 zeigt ein Tilgersystem 1 in Explosionsdarstellung. Das Tilgersystem 1 ist um eine Zentralachse 2 drehbar, und verfügt über einen Tilgermassenträger 3 mit zwei Tilgermassenträgerelementen 4a und 4b, die durch eine Mehrzahl von in Umfangsrichtung in vergleichbaren Umfangsabständen zueinander angeordneten, nietförmigen Halteelementen 5 zueinander gehalten sind. Wie Fig. 1 erkennen lässt, sind die Halteelemente 5 an dem einen Tilgermassenträgerelement 4a befestigt, und werden, nach Durchdringung von Durchgängen 6 im anderen Tilgermassenträgerelement 4b, an der vom erstgenannten Tilgermassenträgerelement 4a abgewandten Seite des anderen Tilgermassenträgerelementes 4b durch Vernietung in Wirkung gebracht.

In einer Zweitfunktion übernehmen die Halteelemente 5 die Aufnahme eines zumindest im Wesentlichen ringförmigen Anschlagträgers 8 eines Anschlages 10. Hierzu weist der Anschlagträger 8 entlang seines Umfangs in an die Umfangsabstände der Halteelemente 5 angepassten Umfangsabständen Befestigungsbereiche 11 auf, von denen jeder zum Durchgang jeweils eines Halteelementes 5 einen Durchlass 13 aufweist. Die radialen Innenseiten der Befestigungsbereiche 11 schließen bündig mit in Umfangsrichtung jeweils benachbarten Haltebereichen 12 für je einen axial benachbarten Anschlagdämpfer 14a, 14b ab, während die radialen Außenseiten der Befestigungsbereiche 11 zum einen radial über die in Umfangsrichtung jeweils benachbarten Haltebereiche 12 hinausragen, und zum anderen in Anpassung an die Form der Durchlässe 13 mit einer Abrundung 15 versehen sind.

Die Haltebereiche 12 sind, jeweils annähernd in Umfangsmitte, mit einem sich zwischen zwei Radialstegen 16 ausgebildeten Druckmittelkanal 17 einer Druckmittelversorgung 18 versehen, auf deren Funktion nachfolgend noch eingegangen wird. In Umfangsrichtung jeweils zwischen einem dieser Stege 16 und dem jeweils benachbarten Befestigungsbereich 11 ist jeweils eine Ausnehmung 19a, 19b vorgesehen, die entweder als Axialvertiefung gegenüber der entsprechenden axialen Deckseite 20a, 20b des Anschlagträgers 8 ausgebildet ist, oder aber den Anschlagträger 8 axial durchdringt. Jede dieser Ausnehmungen 19a, 19b dient zur Aufnahme jeweils eines von an den Anschlagdämpfern 14a, 14b ausgeführten Vorsprüngen 22a, 22b. Die an dem Anschlagdämpfer 14a vorgesehenen Vorsprünge 22a greifen hierbei mit freien Enden 24a in die axial benachbarten Ausnehmungen 19a ein, die an dem Anschlagdämpfer 14b vorgesehenen Vorsprünge 22b dagegen mit freien Enden 24b in die axial benachbarten Ausnehmungen 19b. Die Vorsprünge 22a, 22b bilden zusammen mit den Ausnehmungen 19a, 19b Radialsicherungen 23 der Anschlagdämpfer 14a, 14b gegenüber dem Anschlagträger 8, und verhindern damit radiale Relativbewegungen der Anschlagdämpfer 14a, 14b gegenüber dem Anschlagträger 8 unter drehzahlbedingter Fliehkrafteinwirkung. Dies ist insbesondere dann von Bedeutung, wenn die Anschlagdämpfer 14a, 14b aus einem zumindest im Wesentlichen verformungsfreudigen Material, wie einem Elastomer bestehen, das einer fliehkraftbedingten Verformung nur geringen Widerstand entgegenbringt. Aufgrund der Radialsicherungen 23 sind die Anschlagdämpfer 14a, 14b dagegen am Anschlagträger 8 gehalten, der zumindest im Wesentlichen aus verformungsstabilem Material, wie Metall, besteht, und somit einer fliehkraftbedingten Verformung hohen Widerstand entgegenbringt. Der Anschlagträger 8 dient somit als erste Baueinheit 25 des Anschlages 10, während die Anschlagdämpfer 14a, 14b Teile einer zweiten Baueinheit 26 des Anschlages 10 bilden. Der Anschlag 10 wirkt axial zwischen den beiden Tilgermassenträgerelementen 4a, 4b als Abstandshalter 52, und wird unter der Wirkung der Halteelemente 5 mit beiden Axialseiten 54a, 54b in Anlage am jeweils zugeordneten Tilgermassenträgerelement 4a, 4b gehalten.

Die Anschlagdämpfer 14a, 14b sind jeweils in Bezug zum Anschlagträger 8 derart dimensioniert, dass sie den Anschlagträger 8 umschließen, und zwar mit Befestigungsbereichsumhüllungen 28a, 28b, die an den jeweils zugeordneten Befestigungsbereichen 11 radial in Anlage kommen, und mit Haltebereichsumhüllungen 29a, 29b, die an den jeweils zugeordneten Haltebereichen 12 radial in Anlage kommen. Die Befestigungsbereichsumhüllungen 28a, 28b und/oder die Haltebereichsumhüllungen 29a, 29b können zudem über je einen Radialansatz 30a, 30b verfügen, der beim Aufsetzen der Anschlagdämpfer 14a, 14b auf den Anschlagträger 8 als Axialanschlag 31 wirksam ist, indem die Befestigungsbereichsumhüllungen 28a, 28b über den jeweiligen Radialansatz 30a, 30b in Axialanlage an den Befestigungsbereichen 11 und die Haltebereichsumhüllungen 29a, 29b über den jeweiligen Radialansatz 30a, 30b in Axialanlage an den Haltebereichen 12 gelangen. An den Radialansätzen 30a, 30b der Befestigungsbereichsumhüllungen 28a, 28b sind zudem die Vorsprünge 22a oder 22b vorgesehen, und ragen zum Eingriff in die jeweils zugeordneten Ausnehmungen 19a, 19b der Haltebereiche 12 in jeweils deren Axialrichtung. Zwischen jeweils zwei Vorsprüngen 22a, 22b eines solchen Vorsprungpaares 32a, 32b ist jeweils ein als Aussparung 33a, 33b dienender Umfangsspalt vorgesehen, der für die den Druckmittelkanal 17 der Druckmittelversorgung 18 umfangsseitig beidseits begrenzenden Radialstege 16 dient.

Nach Befestigung des Anschlages 10 an den Halteelementen 5 der Tilgermassenträgerelementen 4a, 4b sind die Anschlagdämpfer 14a, 14b axial jeweils zwischen einem der Tilgermassenträgerelementen 4a, 4b und dem Anschlagträger 8 axial gesichert fixiert, wobei der Anschlagträger 8 aufgrund der Befestigungsbereichsumhüllungen 28 und aufgrund der Haltebereichsumhüllungen 29 radial und aufgrund der Radialansätze 30a und 30b axial umkleidet ist.

Radial außerhalb des Anschlages 8 sind die Tilgermassenträgerelemente 4a, 4b jeweils mit ersten Führungsbahnen 40a, 40b versehen, die zur Aufnahme von walzenförmigen Koppeleinrichtungen 41 dienen. Diese Koppeleinrichtungen 41 greifen weiterhin in zweite Führungsbahnen 42 ein, die an Tilgermassen 43 vorgesehen sind. Die ersten Führungsbahnen 40a, 40b sind ebenso wie die zweiten Führungsbahnen 42 in Umfangsrichtung ebenso wie in Radialrichtung größer ausgebildet als die Koppeleinrichtungen 41, so dass diese sich innerhalb Führungsbahnen 40a, 40b, 42 verlagern können, und damit den Tilgermassen 43 die Möglichkeit einer Relativverlagerung in diesen Richtungen zu gewähren. Die Radialverlagerung der Tilgermassen 43 wird zumindest im Wesentlichen durch drehzahlbedingten Fliehkrafteinfluss erfolgen, während die Umfangsverlagerung der Tilgermassen 43 zumindest im Wesentlichen durch eingeleitete Torsionsschwingungen erfolgt, oder auch durch Bewegungen der Tilgermassen 43 beim An- oder Abschalten eines dem Tilgersystem 1 zugeordneten Antriebs, wie beispielsweise einer Brennkraftmaschine.

Die Tilgermassen 43 nehmen unabhängig von ihrem jeweiligen Betriebszustand stets eine Position radial außerhalb des Anschlages 10 ein, so dass sich auch ein jeweils an der dem Anschlag 10 zugewandten radialen Innenkontur 58 der Tilgermassen 43 vorgesehener Kontaktbereich 45 radial außerhalb des Anschlages 10 befindet. Dieser Kontaktbereich 45 weist eine Mehrzahl von Kontaktzonen 46a, 46b, 47a, 47b auf, von denen die Kontaktzonen 46a oder 46b jeweils mit einer Profilzone 48 eines Profilbereiches 50 am Anschlag 10 zusammen wirken, die Kontaktzone 47a mit einer Profilzone 49a des Profilbereiches 50 und die Kontaktzone 47b mit einer Profilzone 49b des Profilbereiches 50. Die Profilzone 48 des Anschlages 10 ist jeweils an den Anschlagdämpfern 14a, 14b des Anschlags 10 an deren den Tilgermassen 43 zugewandten Radialseiten vorgesehen. Die ersten Kontaktzonen 46a, 46b der Tilgermassen 43 sind in Umfangsrichtung zumindest im Wesentlichen im Bereich der jeweils zugeordneten Koppeleinrichtung 41 vorgesehen, während die zweiten Kontaktzonen 47a, 47b in Umfangsrichtung zumindest im Wesentlichen in den Umfangsendbereichen der jeweiligen Tilgermasse 43 vorliegen. Entsprechend ist die erste Profilzone 48 an den äußeren Radialseiten der jeweiligen Haltebereichsumhüllungen 29a, 29b der Anschlagdämpfer 14a, 14b vorgesehen, und die zweiten Profilzonen 49a, 49b sind jeweils an den äußeren Radialseiten der jeweiligen Befestigungsbereichsumhüllungen 28a, 28b der Anschlagdämpfer 14a, 14b vorgesehen.

Der jeweilige Druckmittelkanal 17 der Druckmittelversorgung 18 ist dagegen in Umfangsrichtung jeweils so angeordnet, dass er zumindest im Wesentlichen auf die Führungsbahnen 40 und 42 und insbesondere auf die walzenförmigen Koppeleinrichtungen 41 zur Versorgung derselben mit Druckmittel ausgerichtet ist. Dies ist in Fig. 2 deutlich sichtbar, wobei das in Blickrichtung vordere Tilgermassenträgerelement 4a zur Darstellung einer Tilgermasse 43 sowie des Anschlages 10 herausgeschnitten ist. Fig. 3 zeigt das in Fig. 1 in Explosionsdarstellung abgebildete Tilgersystem 1 in zusammengebautem Zustand.

In Fig. 2 nehmen die Tilgermassen 43 eine Position ein, bei welcher durch Drehung des Tilgersystems 1 um die Zentralachse 2 eine Auslenkung der Tilgermassen 43 nach radial außen erfolgt, wobei die Tilgermassen 43 wegen fehlender Torsionsschwingung aber frei von einer Auslenkung in Umfangsrichtung sind. Bei einem solchen Betriebszustand sind sowohl die ersten Kontaktzonen 46a, 46b des Kontaktbereiches 45 der jeweiligen Tilgermasse 43 als auch die zweiten Kontaktzonen 47a, 47b des Kontaktbereiches 45 der jeweiligen Tilgermasse 43 jeweils von den entsprechenden Profilzonen 48a oder 48b des Profilbereiches 50 am Anschlag 10 oder den entsprechenden Profilzonen 49a oder 49b des Profilbereiches 50 am Anschlag 10 beabstandet.

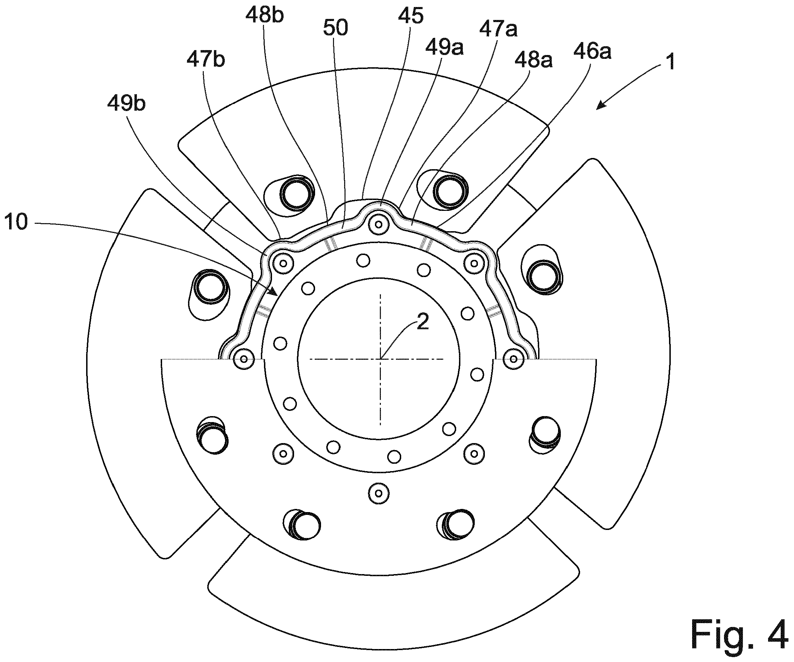

Fig. 4 zeigt das Tilgersystem 1 der Fig. 1 bis 3 mit Auslenkung der Tilgermassen 43 um 46° gegenüber der in Fig. 2 dargestellten Ausgangsposition. Erneut nehmen die Tilgermassen 43 eine Position ein, bei welcher durch Drehung des Tilgersystems 1 um die Zentralachse 2 eine Auslenkung der Tilgermassen 43 nach radial außen erfolgt, wobei die Tilgermassen 43 jetzt aber infolge vorhandener Umfangsauslenkung, beispielsweise aufgrund von Torsionsschwingungen, eine zusätzliche Auslenkung in Umfangsrichtung erfahren. Hierbei kommen die in Auslenkrichtung jeweils entsprechenden ersten Kontaktzonen 46a, 46b, hier der ersten Kontaktzone 46a, des Kontaktbereiches 45 der jeweiligen Tilgermasse 43 mit der entsprechenden Profilzone 48a des Profilbereiches 50 am Anschlag 10 zumindest im Wesentlichen radial in Anlage, ohne dass es bereits zu einem Kontakt der zweiten Kontaktzonen 47a, 47b des Kontaktbereiches 45 der jeweiligen Tilgermasse 43 mit der entsprechenden Profilzone 49a oder 49b des Profilbereiches 50 am Anschlag 10 kommt.

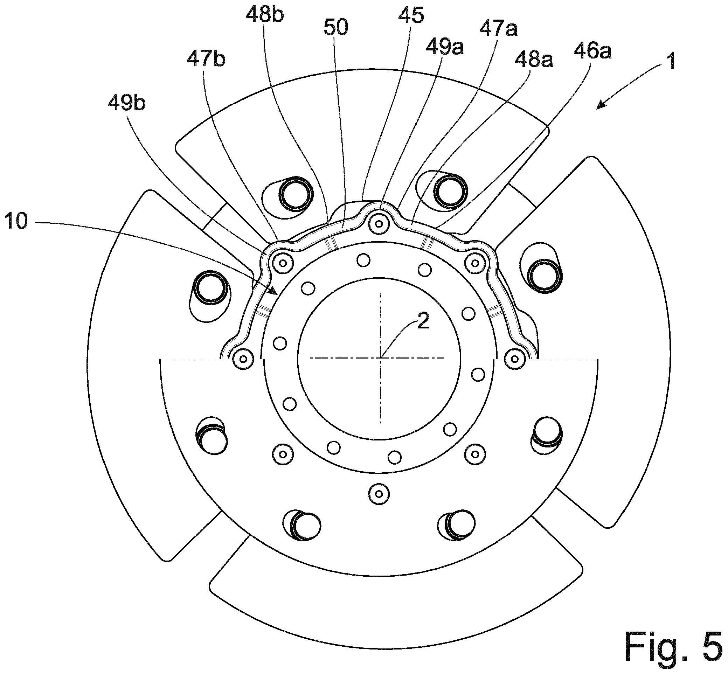

Fig. 5 zeigt das Tilgersystem 1 der Fig. 1 bis 3 mit Auslenkung der Tilgermassen 43 um 54° gegenüber der in Fig. 2 dargestellten Ausgangsposition. Auch hier nehmen die Tilgermassen 43 eine Position ein, bei welcher durch Drehung des Tilgersystems 1 um die Zentralachse 2 eine Auslenkung der Tilgermassen 43 nach radial außen erfolgt, wobei die Tilgermassen 43 jetzt aber infolge nochmals stärkerer Umfangsauslenkung eine noch weitere Auslenkung in Umfangsrichtung erfahren. Hierbei kommen die in Auslenkrichtung jeweils entsprechenden zweiten Kontaktzonen 47a oder 47b des Kontaktbereiches 45 der jeweiligen Tilgermasse 43 mit den entsprechenden Profilzonen 49a oder 49b des Profilbereiches 50 am Anschlag 10 in Anlage. Der bereits vorhandene Kontakt der ersten Kontaktzone 46a des Kontaktbereiches 45 der jeweiligen Tilgermasse 43 mit der entsprechenden Profilzone 48 des Profilbereiches 50 am Anschlag 10 bleibt weiter bestehen.

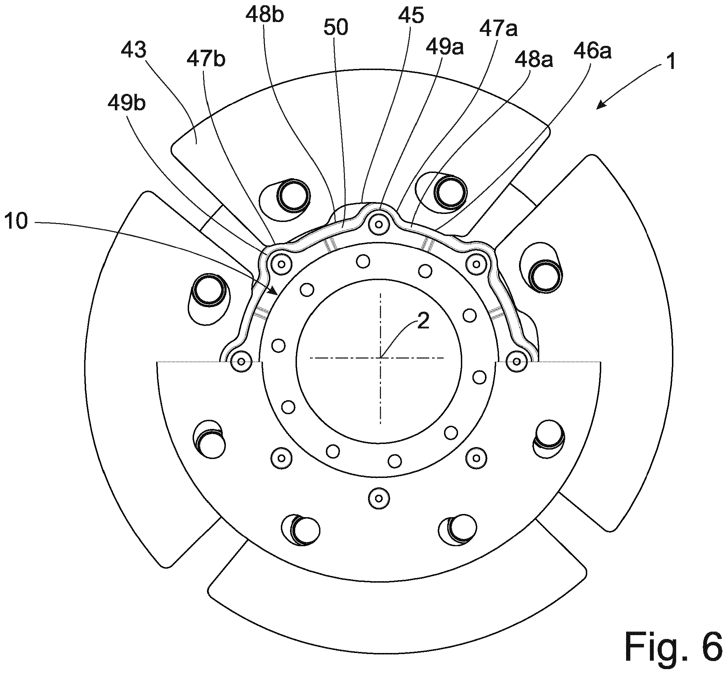

Schließlich zeigt Fig. 6 das Tilgersystem 1 der Fig. 1 bis 3 mit Auslenkung der Tilgermassen 43 um 60° gegenüber der in Fig. 2 dargestellten Ausgangsposition. Auch hier nehmen die Tilgermassen 43 eine Position ein, bei welcher durch Drehung des Tilgersystems 1 um die Zentralachse 2 eine Auslenkung der Tilgermassen 43 nach radial außen erfolgt, wobei die jeweilige Tilgermasse 43 jetzt aber infolge sehr starker Umfangsauslenkung eine Auslenkung in Umfangsrichtung erfährt, die zu einer elastischen Verformung der in Auslenkrichtung jeweils entsprechenden Profilzonen 49a oder 49b des Profilbereiches 50 am Anschlag 10 führt.

Für noch weitergehende Auslenkungen der Tilgermassen 43 wird ein anderer, nicht gezeigter Anschlag benötigt, um einerseits zu vermeiden, dass es zu einer plastischen Verformung der in Auslenkrichtung jeweils entsprechenden Profilzonen 49a, 49b des Profilbereiches 50 am Anschlag 10 kommt, wodurch die Anschlagdämpfer 14a, 14b irreparable Schäden erfahren könnte, und andererseits zu vermeiden, dass es zu einer Schädigung der Halteelemente 5 kommt.

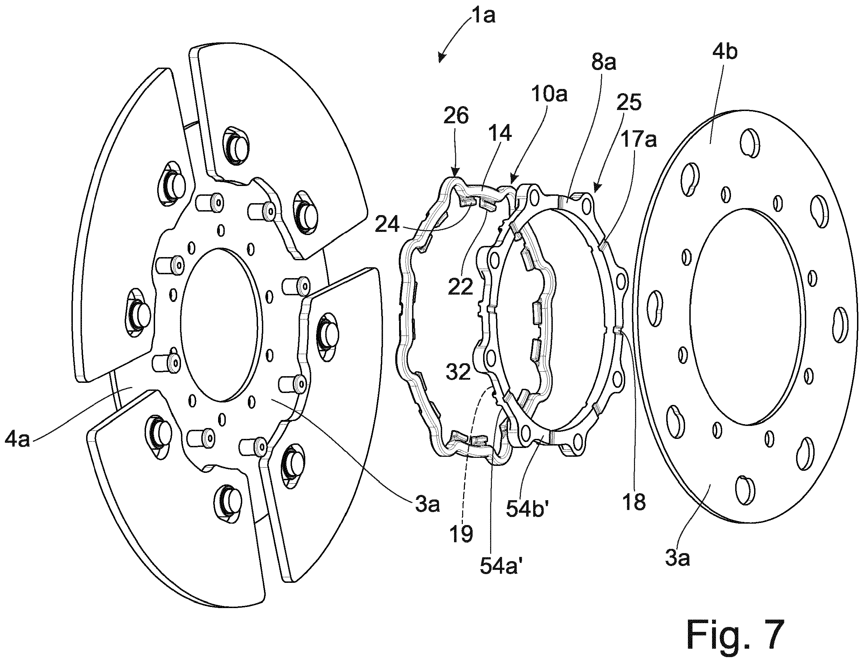

Das Tilgersystem 1a der Fig. 7 ist mit lediglich einem als Baueinheit 26 wirksamen Anschlagdämpfer 14 versehen, der zur Bildung des als Baueinheit 25 wirksamen Anschlages 10a von der Seite des einen Tilgermassenträgerelementes 4a des Tilgermassenträgers 3a aus auf den Anschlagträger 8a aufgeschoben wird, so dass die Vorsprünge 22 des jeweiligen Vorsprungpaares 32 mit ihren auf den Anschlagträger 8a zugerichteten freien Enden 24 in die in Fig. 7 nicht erkennbaren Ausnehmungen 19 des Anschlagträgers 8a eingreifen. Da an der dem anderen Tilgermassenträgerelement 4b zugewandten Axialseite 54b' des Anschlagträgers 8a kein Anschlagdämpfer vorgesehen ist, sind an dieser Axialseite 54b' sowohl Ausnehmungen für an einem Anschlagdämpfer vorgesehene Vorsprünge als auch Radialstege beidseits des jeweiligen Druckmittelkanals 17a der Druckmittelversorgung 18 entbehrlich. Stattdessen sind die Druckmittelkanäle 17a von der Seite des anderen Tilgermassenträgerelementes 4b aus in diese ansonsten ebenflächige Axialseite 54b' des Anschlagträgers 8a eingebracht. Funktional bestehen gegenüber dem bislang behandelten Tilgersystem 1 keine Unterschiede.

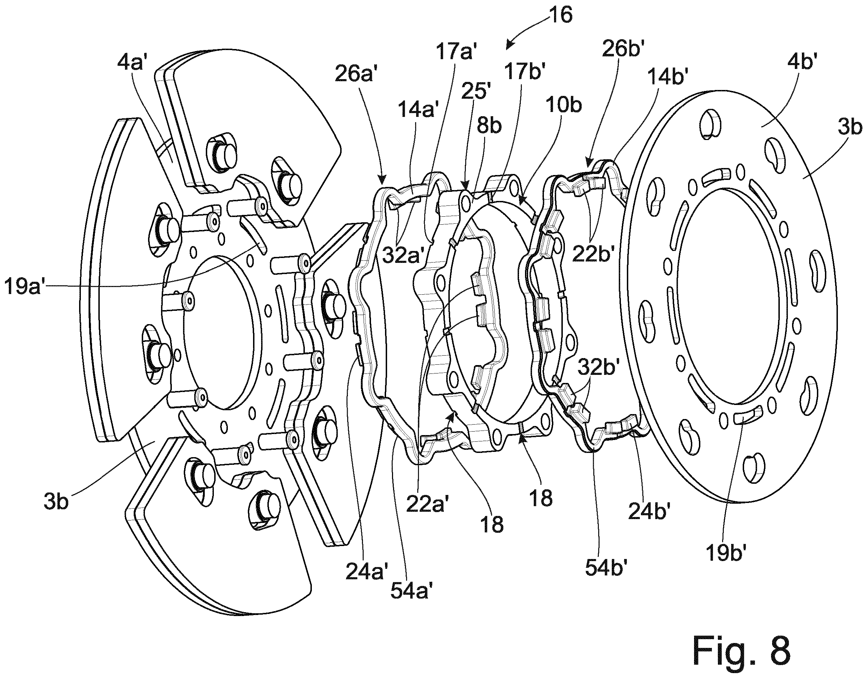

Bei dem in Fig. 8 bis 11 behandelten Tilgersystem 1b ist zwar ebenso wie bei dem Tilgersystem 1 gemäß den Fig. 1 bis 6 dem als Baueinheit 25' wirksamen Anschlagträger 8b des Anschlages 10b beidseits jeweils ein als Baueinheit 26' wirksamer Anschlagdämpfer 14a' und 14b' zugeordnet, jedoch greifen die Vorsprünge 22a' und 22b' dieser Anschlagdämpfer 14a' und 14b' mit ihren freien Enden 24a', 24b' anstatt in Ausnehmungen 19a, 19b im Anschlagträger 8 in Ausnehmungen 19a', 19b' des jeweils benachbarten Tilgermassenträgerelementes 4a', 4b' des Tilgermassenträgers 3b ein. Die Vorsprünge 22a' und 22b' des jeweiligen Vorsprungpaares (32a', 32b') der Anschlagdämpfer 14a' und 14b' erstrecken sich daher, ausgehend von der vom Anschlagträger 8b axial jeweils abgewandten Seite in Richtung zum jeweils benachbarten Tilgermassenträgerelement 4a' oder 4b', um dort mit den Ausnehmungen 19a' oder 19b' in Eingriff zu treten. Entsprechend sind die den Anschlagdämpfern 14a' und 14b' jeweils zugewandten Axialseiten 54a', 54b' des Anschlagträgers 8b mit Ausnahme der Druckmittelkanäle 17a', 17b' der Druckmittelversorgung 18 ebenflächig ausgebildet. Funktional bestehen gegenüber dem Tilgersystem 1 gemäß Fig. 1 bis 6 aber keine Unterschiede.

Auch bei dem in den Fig. 12 bis 14 gezeigten Tilgersystem 1c ist der Anschlag 10 an den Tilgermassenträgerelementen 4a, 4b befestigt. Wie insbesondere aus Fig. 14 erkennbar, sind die hierfür benötigten Halteelemente 5c jeweils Teil des Anschlagträgers 8c, indem sie entweder einstückig mit dem Anschlagträger 8c ausgebildet oder aber an diesem befestigt sind, beispielsweise durch einpressen. Gemäß Fig. 12 sind in den Tilgermassenträgerelementen 4a', 4b' jeweils Durchgänge 56 vorgesehen, welche von den Halteelementen 5c jeweils durchdrungen sind. Nach Durchführung einer Vernietung von der dem Anschlag 10c jeweils abgewandten Seite des jeweiligen Tilgermassenträgerelementes 4a, 4b aus wird die Festverbindung zwischen den Tilgermassenträgerelementen 4a, 4b und dem Anschlag 10c hergestellt.

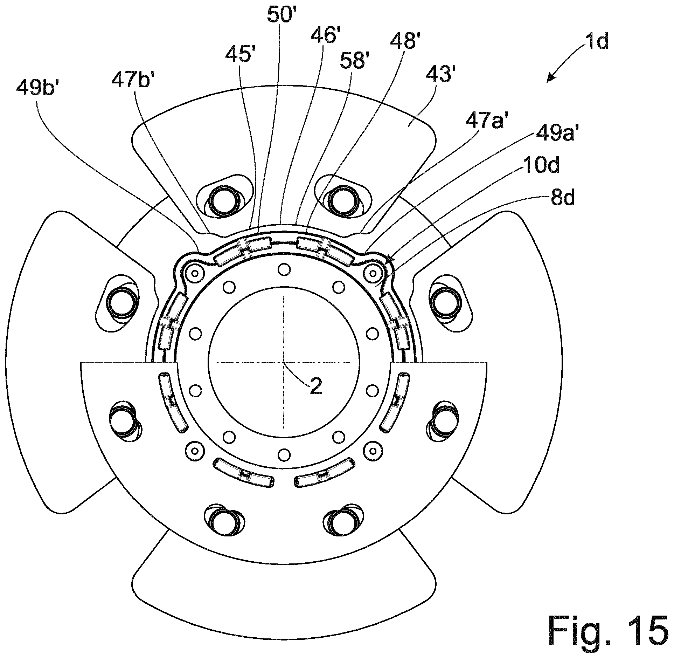

Das Tilgersystem 1d gemäß Fig. 15 bis 18 unterscheidet sich von dem Tilgersystem 1b gemäß Fig. 8 bis 11 durch die radiale Innenkontur 58' der Tilgermassen 43'. Diese Tilgermassen 43' sind nämlich im Umfangsbereich zwischen den Koppeleinrichtungen 41 ebenso weit nach radial innen gezogen wie in den Umfangsbereichen der Koppeleinrichtungen 41. Dadurch kann die Trägheit der jeweiligen Tilgermasse 43' erhöht werden. Eine derartige radiale Innenkontur 58' der Tilgermassen 43' kann realisiert werden, wenn für die Befestigung des Anschlages 10d lediglich in Umfangsrichtung zwischen den Tilgermassen 43' vorgesehene Halteelemente 5 Anwendung finden, und dadurch am Anschlag 10d jeweils auf Befestigungsbereiche 11 im Umfangsbereich der Tilgermasse 43' verzichtet werden kann.

In Fig. 15 nehmen die Tilgermassen 43' eine Position ein, bei welcher durch Drehung des Tilgersystems 1d um die Zentralachse 2 eine Auslenkung der Tilgermassen 43' nach radial außen erfolgt, wobei die Tilgermassen 43' wegen fehlender Torsionsschwingung aber frei von einer Auslenkung in Umfangsrichtung sind. Bei einem solchen Betriebszustand ist die erste Kontaktzone 46' des Kontaktbereiches 45' der jeweiligen Tilgermasse 43' und auch die zweiten Kontaktzonen 47a', 47b' des Kontaktbereiches 45' der jeweiligen Tilgermasse 43' jeweils von der entsprechenden Profilzone 48' des Profilbereiches 50' am Anschlag 10d oder den entsprechenden Profilzonen 49a', 49b' des Profilbereiches 50' am Anschlag 10d beabstandet.

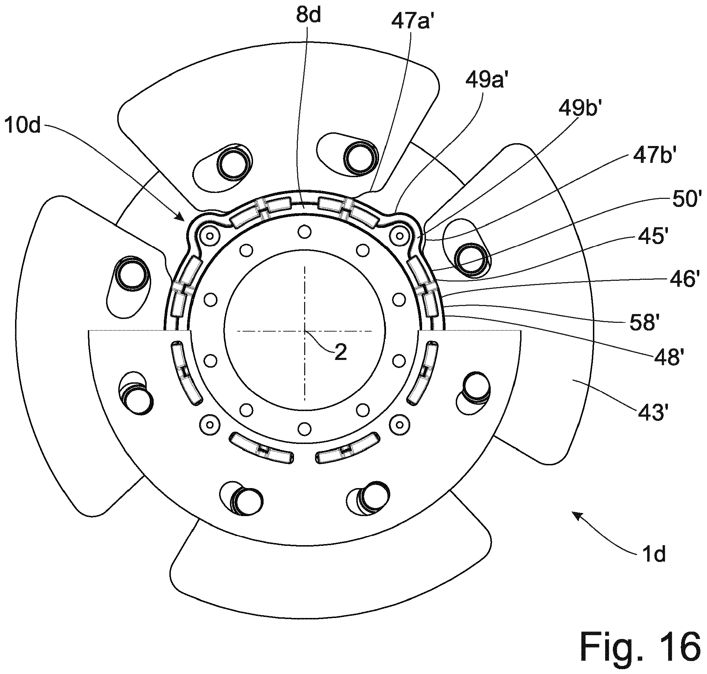

Fig. 16 zeigt das Tilgersystem 1d mit Auslenkung der Tilgermassen 43' um 39° gegenüber der in Fig. 15 dargestellten Ausgangsposition. Erneut nehmen die Tilgermassen 43' eine Position ein, bei welcher durch Drehung des Tilgersystems 1d um die Zentralachse 2 eine Auslenkung der Tilgermassen 43' nach radial außen erfolgt, wobei die Tilgermassen 43' jetzt aber infolge vorhandener Umfangsauslenkung, beispielsweise aufgrund von Torsionsschwingungen, eine zusätzliche Auslenkung in Umfangsrichtung erfahren. Hierbei kommt die in Auslenkrichtung erste Kontaktzone 46' des Kontaktbereiches 45' der jeweiligen Tilgermasse 43' mit der Profilzone 48' des Profilbereiches 50' am Anschlag 10d zumindest im Wesentlichen radial in Anlage, ohne dass es bereits zu einem Kontakt der zweiten Kontaktzonen 47a' oder 47b' des Kontaktbereiches 45' der jeweiligen Tilgermasse 43' mit der entsprechenden Profilzone 49a' des Profilbereiches 50' am Anschlag 10d oder der entsprechenden Profilzone 49b' des Profilbereiches 50' am Anschlag 10d kommt.

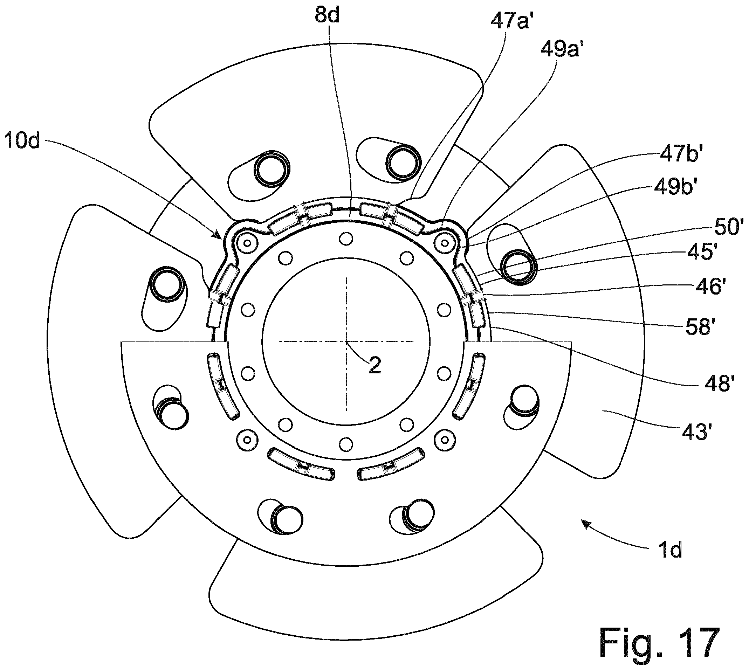

Fig. 17 zeigt das Tilgersystem 1d mit Auslenkung der Tilgermassen 43' um 44° gegenüber der in Fig. 15 dargestellten Ausgangsposition. Auch hier nehmen die Tilgermassen 43' eine Position ein, bei welcher durch Drehung des Tilgersystems 1d um die Zentralachse 2 eine Auslenkung der Tilgermassen 43' nach radial außen erfolgt, wobei die Tilgermassen 43' jetzt aber infolge nochmals stärkerer Umfangsauslenkung eine noch weitere Auslenkung in Umfangsrichtung erfahren. Hierbei kommen die in Auslenkrichtung jeweils entsprechenden zweiten Kontaktzonen 47a', 47b' des Kontaktbereiches 45' der jeweiligen Tilgermasse 43' mit den entsprechenden Profilzonen 49a', 49b' des Profilbereiches 50' am Anschlag 10d in Anlage. Der bereits vorhandene Kontakt der ersten Kontaktzone 46' des Kontaktbereiches 45' der jeweiligen Tilgermasse 43' mit der entsprechenden Profilzone 48' des Profilbereiches 50' am Anschlag 10d bleibt weiter bestehen.

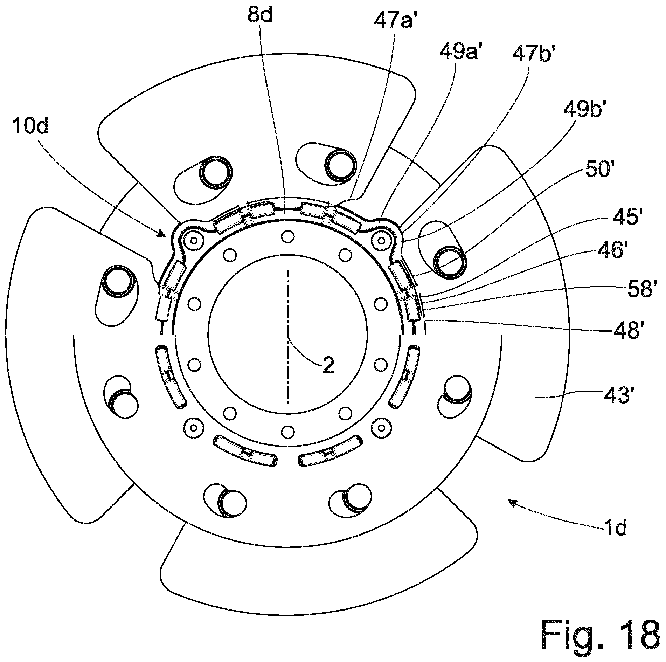

Schließlich zeigt Fig. 18 das Tilgersystem 1d mit Auslenkung der Tilgermassen 43' um 49° gegenüber der in Fig. 15 dargestellten Ausgangsposition. Auch hier nehmen die Tilgermassen 43' eine Position ein, bei welcher durch Drehung des Tilgersystems 1d um die Zentralachse 2 eine Auslenkung der Tilgermassen 43' nach radial außen erfolgt, wobei die jeweilige Tilgermasse 43' jetzt aber infolge sehr starker Umfangsauslenkung eine Auslenkung in Umfangsrichtung erfährt, die zu einer elastischen Verformung der in Auslenkrichtung jeweils entsprechenden Profilzonen 49a' oder 49b' des Profilbereiches 50' am Anschlag 10d führt.

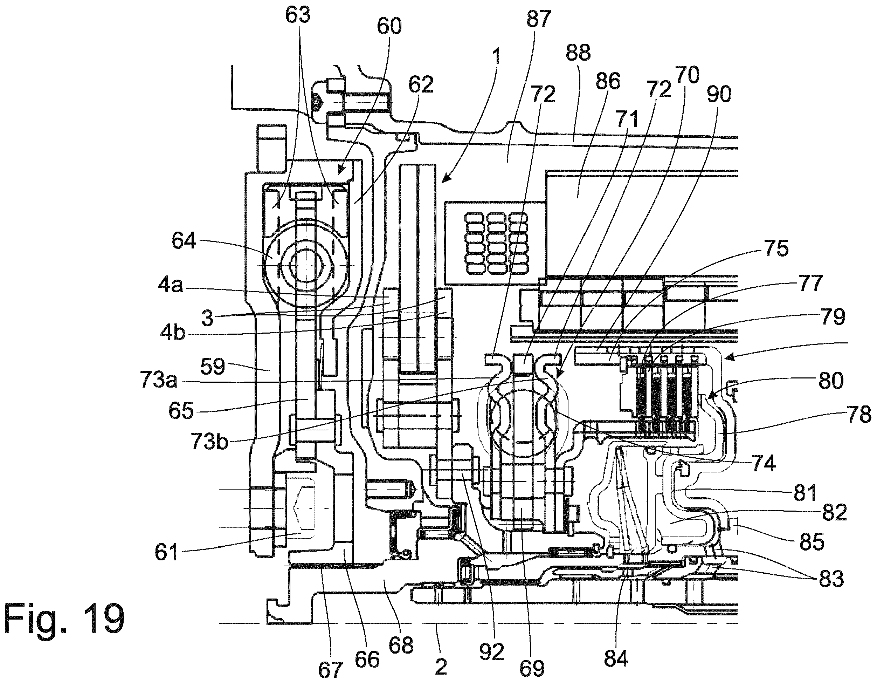

In Fig. 19 ist eine Einbausituation für das Tilgersystem 1 beispielhaft und stellvertretend auch für die Tilgersysteme 1a, 1b, 1c oder 1d gezeigt. Ein Eingangsflansch 59 eines ersten Torsionsschwingungsdämpfers 60 ist mittels Befestigungselementen 61 an einer Kurbelwelle einer nicht gezeigten Brennkraftmaschine befestigt. Der Eingangsflansch 59 weist ebenso wie ein mit diesem fest verbundenes Deckelement 62 Ansteuerelemente 63 für einen Umfangsenergiespeichersatz 64 auf, der sich anderenends an einer Nabenscheibe 65 abstützt. Die Nabenscheibe 65 nimmt drehfest eine Torsionsdämpfernabe 66 auf, die mittels einer Verzahnung 67 mit einer Antriebsnabe 68 drehfest verbunden ist. An der Antriebsnabe 68 ist zum einen ein Eingang 69 eines zweiten Torsionsschwingungsdämpfers 70 in Form einer Nabenscheibe 71 drehfest aufgenommen, und zum anderen ist ein Tilgermassenträgerelement 4a oder 4b, beispielsweise das Tilgermassenträgerelement 4b des Tilgermassenträgers 3, mittels einer Vernietung 92 an der Antriebsnabe 68 befestigt. Ein Ausgang 72 des zweiten Torsionsschwingungsdämpfers 70, gebildet durch Deckelemente 73a und 73b beidseits der Nabenscheibe 71, steht mittels eines Umfangsenergiespeichersatzes 74 mit dem Eingang 69 dieses Torsionsschwingungsdämpfers 70 in Wirkverbindung, und nimmt zudem einen ersten Kupplungselemententräger 75 eines Kupplungssystems 76 auf. An dem ersten Kupplungselemententräger 75 sind erste Kupplungselemente 77 drehfest, aber axial verlagerbar, aufgenommen, die mittels eines Kupplungskolbens 78 einer Kupplungsvorrichtung 80 mit zweiten Kupplungselementen 79 des Kupplungssystems 76 in Wirkverbindung gebracht werden können, wenn in einem dem Kupplungskolben 78 benachbarten Druckraum 81 ein höherer Druck angelegt sein sollte als in einem die Gegenseite des Kupplungskolbens 78 beaufschlagenden Kühlraum 82. Umgekehrt ist die Wirkverbindung zwischen den ersten Kupplungselementen 77 und den zweiten Kupplungselementen 79 aufgehoben, wenn im Kühlraum 82 ein höherer Druck anliegen sollte als im Druckraum 81. Die Versorgung von Druckraum 81 und Kühlraum 82 erfolgt mittels Druckmittelleitungen 83, 84.

Die zweiten Kupplungselemente 79 sind an einem zweiten Kupplungselemententräger 90 drehfest, aber axial verlagerbar, aufgenommen. Der zweite Kupplungselemententräger 90 ist zum einen mit einer Abtriebsnabe 85 drehfest verbunden, und zum anderen von einer Elektromaschine 86 radial umschlossen. Das Kupplungssystem 76 kann dazu verwendet werden, die Elektromaschine 86 von der Brennkraftmaschine abzukoppeln, oder aber die Elektromaschine 86 mit der Brennkraftmaschine zu verbinden.

Die beiden Torsionsschwingungsdämpfer 60 und 70 sind ebenso wie das Kupplungssystem 76, das Tilgersystem 1 sowie die Elektromaschine 86 in einem Raum 87 eines Getriebes 88 angeordnet. Dieser Raum 87 ist zumindest mit einer geringen Menge an Druckmittel befüllt, so dass von einem Feuchtraum ausgegangen werden kann. Das im Raum 87 enthaltene Druckmittel wird beispielsweise, wie bereits in Verbindung zu den Fig. 1 bis 3 erläutert, über die Druckmittelkanäle 17 der Druckmittelversorgung 18 des Tilgersystems 1 zu den Koppeleinrichtungen 41 geleitet, welche in die Führungsbahnen 40 der Tilgermassenträgerelemente 4a und 4b sowie in die Führungsbahnen 42 der Tilgermassen 43 eingreifen.

### Bezugszeichen

- 1: Tilgersystem
- 2: Zentralachse
- 3: Tilgermassenträger
- 4: Tilgermassenträgerelemente
- 5: Halteelemente
- 6: Durchgänge im Tilgermassenträgerelement
- 8: Anschlagträger
- 10: Anschlag
- 11: Befestigungsbereiche am Anschlagträger
- 12: Haltebereiche
- 13: Durchlass
- 14: Anschlagdämpfer
- 15: Abrundung
- 16: Radialstege
- 17: Druckmittelkanal
- 18: Druckmittelversorgung
- 19: Ausnehmung
- 20: Deckseite
- 22: Vorsprünge
- 23: Radialsicherungen
- 24: freie Enden der Vorsprünge
- 25: erste Baueinheit des Anschlages
- 26: zweite Baueinheit des Anschlages
- 28: Befestigungsbereichsumhüllungen
- 29: Haltebereichsumhüllungen
- 30: Radialansatz
- 31: Axialanschlag
- 32: Vorsprungpaar
- 33: Umfangsspalt
- 40: erste Führungsbahnen in den Tilgermassenträgerelementen
- 41: Koppeleinrichtungen
- 42: zweite Führungsbahnen an Tilgermassen
- 43: Tilgermassen
- 45: Kontaktbereich
- 46: Kontaktzone
- 47: Kontaktzone
- 48: Profilzone
- 49: Profilzone
- 50: Profilbereich
- 52: Abstandshalter
- 54: Axialseiten
- 56: Durchgang
- 58: Innenkontur
- 59: Eingangsflansch
- 60: erster Torsionsschwingungsdämpfer
- 61: Befestigungselemente
- 62: Deckelement
- 63: Ansteuerelemente
- 64: Umfangsenergiespeichersatz
- 65: Nabenscheibe
- 66: Torsionsdämpfernabe
- 67: Verzahnung
- 68: Antriebsnabe
- 69: Eingang zweiter Torsionsschwingungsdämpfer
- 70: zweiter Torsionsschwingungsdämpfer
- 71: Nabenscheibe
- 72: Ausgang des zweiten Torsionsschwingungsdämpfers
- 73: Deckelement
- 74: Umfangsenergiespeichersatz
- 75: erster Kupplungselemententräger
- 76: Kupplungssystem
- 77: erste Kupplungselemente
- 78: Kupplungskolben
- 79: zweite Kupplungselemente
- 80: Kupplungsvorrichtung
- 81: Druckraum
- 82: Kühlraum
- 83: Druckmittelleitung
- 84: Druckmittelleitung
- 85: Abtriebsnabe
- 86: Elektromaschine
- 87: Raum
- 88: Getriebe
- 90: zweiter Kupplungselemententräger
- 92: Vernietung

## Patentansprüche

1. Tilgersystem (1, 1a, 1b, 1c, 1d) mit einem Tilgermassenträger (3, 3a, 3b), an welchem zumindest eine Tilgermasse (43, 43') mittels Koppeleinrichtungen (41), welche Führungsbahnen (40a, 40b) im Tilgermassenträger (3, 3a, 3b) mit Führungsbahnen (42) in der zumindest einen Tilgermasse (43, 43') verbinden, relativ bewegbar aufgenommen ist, sowie mit wenigstens einem Anschlag (10, 10a, 10b, 10c, 10d), wobei die zumindest eine Tilgermasse (43, 43') radial außerhalb des Anschlags (10, 10a, 10b, 10c, 10d) angeordnet ist, und an ihrer dem Anschlag (10, 10a, 10b, 10c, 10d) zugewandten Radialseite mit einem Kontaktbereich (45, 45') versehen ist, der mit einem am Anschlag (10, 10a, 10b, 10c, 10d) an dessen der zumindest einen Tilgermasse (43, 43') zugeordneten Radialseite vorgesehenen Profilbereich (50, 50') zusammenwirkt, wobei der Anschlag (10, 10a, 10b, 10c, 10d) wenigstens einen Anschlagträger (8, 8a, 8b, 8c, 8d) als erste Baueinheit (25, 25') und zumindest einen über eine Radialsicherung (23) mit dem Anschlagträger (8, 8a, 8b, 8c, 8d) verbundenen Anschlagdämpfer (14a, 14b, 14, 14a', 14b') als zweite Baueinheit (26a, 26b, 26, 26a', 26b') aufweist, **dadurch gekennzeichnet, dass** der Radialsicherung (23) jeweils eine Druckmittelversorgung (18) zugeordnet ist, die mit jeweils einer der Koppeleinrichtungen (41) zusammenwirkt.

2. Tilgersystem (1, 1a, 1b, 1c, 1d) nach Anspruch 1, **dadurch gekennzeichnet, dass** eine von mehreren Baueinheiten (25, 25', 26a, 26b, 26, 26a', 26b'), also entweder der Anschlagdämpfer (14a, 14b, 14, 14a', 14b') oder der Anschlagträger (8, 8a, 8b, 8c, 8d) des Anschlages (10, 10a, 10b, 10c, 10d) oder der Tilgermassenträger (3, 3a, 3b), wenigstens einen Vorsprung (22a, 22b, 22", 22b') mit von der Radialrichtung abweichender Erstreckungsrichtung aufweist, der in eine entsprechend geformte Ausnehmung (19a, 19b, 19a', 19b') einer der anderen Baueinheiten (25, 25', 26a, 26b, 26, 26a', 26b') eingreift, wobei der Vorsprung (22a, 22b, 22", 22b') ebenso wie die Ausnehmung (19a, 19b, 19a', 19b') jeweils Bestandteile der Radialsicherung (23) bilden.

3. Tilgersystem (1, 1a, 1b, 1c, 1d) nach Anspruch 2, **dadurch gekennzeichnet, dass** der Vorsprung (22a, 22b, 22", 22b') an der als Anschlagdämpfer (14a, 14b, 14, 14a', 14b') des Anschlags (10, 10a, 10b, 10c, 10d) wirksamen Baueinheit (26a, 26b, 26, 26a', 26b') vorgesehen und die Ausnehmung (19a, 19b, 19a', 19b') an der anderen als Anschlagträger (8, 8a, 8b, 8c, 8d) oder als Tilgermassenträger (3, 3a, 3b) wirksamen Baueinheit (25, 25') vorgesehen ist, wobei der Vorsprung (22a, 22b, 22", 22b') mit einem der Ausnehmung (19a, 19b, 19a', 19b') zugewandten freien Ende (24a, 24b, 24, 24a', 24b') in die zugeordnete Ausnehmung (19a, 19b, 19a', 19b') eindringt.

4. Tilgersystem (1, 1a, 1b, 1c, 1d) nach zumindest einem der Ansprüche 1 bis 3, **dadurch gekennzeichnet, dass** die Radialsicherung (23) pro Koppeleinrichtung (41) ein Vorsprungpaar (32a, 32b, 32, 32a', 32b') aufweist, das in Umfangsrichtung zwischen sich über einen auf die zugeordnete Koppeleinrichtung (41) weisenden und als Druckmittelversorgung (18) dienenden Druckmittelkanal (17a, 17b, 17, 17a', 17b') verfügt.

5. Tilgersystem (1, 1a, 1b, 1c, 1d) nach Anspruch 1, **dadurch gekennzeichnet, dass** der wenigstens eine Anschlagträger (8, 8a, 8b, 8c, 8d) zur Befestigung an dem Tilgermassenträger (3, 3a, 3b) vorgesehen ist, und der zumindest eine Anschlagdämpfer (14a, 14b, 14, 14a', 14b') mittels des wenigstens einen Anschlagträgers (8, 8a, 8b, 8c, 8d) axial zwischen dem Tilgermassenträger (3, 3a, 3b) und dem Anschlagträger (8, 8a, 8b, 8c, 8d) gehalten ist.

6. Tilgersystem (1, 1b, 1c, 1d) nach Anspruch 1 mit einem Tilgermassenträger (3, 3a, 3b), welcher über zumindest zwei mit Axialversatz zueinander angeordnete Tilgermassenträgerelemente (4a, 4b, 4a', 4b') verfügt, die axial zwischen sich den Anschlag (10, 10b, 10c, 10d) aufnehmen, **dadurch gekennzeichnet, dass** dem wenigstens einen Anschlagträger (8, 8b, 8c, 8d) zumindest zwei Anschlagdämpfer (14a, 14b, 14a', 14b') zugeordnet sind, wobei jeder dieser Anschlagdämpfer (14a, 14b, 14a', 14b') jeweils axial zwischen einem der Tilgermassenträgerelemente (4a, 4b, 4a', 4b') und dem Anschlagträger (8, 8b, 8c, 8d) gehalten ist.

7. Tilgersystem (1, 1a, 1b, 1c, 1d) nach Anspruch 5 oder 6, **dadurch gekennzeichnet, dass** der wenigstens eine Anschlagträger (8, 8a, 8b, 8c, 8d) zur Befestigung an dem Tilgermassenträger (3, 3a, 3b) über zumindest einen Befestigungsbereich (11) verfügt, und dass der zumindest eine Anschlagdämpfer (14a, 14b, 14, 14a', 14b') wenigstens eine an den zumindest einen Befestigungsbereich (11) des Anschlagträgers (8, 8a, 8b, 8c, 8d) formlich angepasste Befestigungsbereichsumhüllung (28) aufweist, welche den zumindest einen Befestigungsbereich (11) des Anschlagträgers (8, 8a, 8b, 8c, 8d) vom Kontaktbereich (45, 45') der zugeordneten Tilgermasse (43, 43') trennt.

8. Tilgersystem (1, 1a, 1b, 1c, 1d) nach Anspruch 7, **dadurch gekennzeichnet, dass** der jeweilige Befestigungsbereich (28) des Anschlagträgers (8, 8a, 8b, 8c, 8d) zur Aufnahme wenigstens eines Halteelementes (5, 5c) dient.

9. Tilgersystem (1, 1a, 1b, 1c, 1d) nach Anspruch 1, **dadurch gekennzeichnet, dass** der wenigstens eine Anschlagträger (8, 8a, 8b, 8c, 8d) ebenso wie der zumindest eine Anschlagdämpfer (14a, 14b, 14, 14a', 14b') jeweils ringförmig ausgebildet ist.

10. Tilgersystem (1, 1a, 1b, 1c, 1d) nach Anspruch 1 mit einem Tilgermassenträger (3, 3a, 3b), welcher über zumindest zwei mit Axialversatz zueinander angeordnete Tilgermassenträgerelemente (4a, 4b, 4a', 4b') verfügt, die axial zwischen sich den Anschlag (10, 10a, 10b, 10c, 10d) aufnehmen, und mit einem Anschlag (10, 10a, 10b, 10c, 10d), bei welchem der wenigstens eine Anschlagträger (8, 8a, 8b, 8c, 8d) aus einem zumindest im Wesentlichen verformungsstabilen Material und der zumindest eine Anschlagdämpfer (14a, 14b, 14, 14a', 14b') aus einem zumindest im Wesentlichen verformungsfreudigen Material besteht, **dadurch gekennzeichnet, dass** der wenigstens eine Anschlagträger (8, 8a, 8b, 8c, 8d) als Abstandshalter (52) zwischen den Tilgermassenträgerelementen (4a, 4b, 4a', 4b') wirksam ist.

11. Tilgersystem (1, 1a, 1b, 1c, 1d) nach Anspruch 1, bei welchem der Kontaktbereich (45, 45') der zumindest einen Tilgermasse (43, 43') an deren dem Anschlag (10, 10a, 10b, 10c, 10d) zugewandten Radialseite über zumindest zwei Kontaktzonen (46a, 46b, 47a, 47b; 46', 47a', 47b') und der Profilbereich (50, 50') des Anschlags (10, 10a, 10b, 10c, 10d) an dessen der zumindest einen Tilgermasse (43, 43') zugeordneten Radialseite über zumindest zwei Profilzonen (48a, 48b, 49a, 49b; 48', 49a', 49b') verfügt, **dadurch gekennzeichnet, dass** die jeweils erste Kontaktzone (46a, 46b, 46') des Kontaktbereiches (45, 45') an der radialen Innenseite der jeweiligen Tilgermasse (43, 43') und die jeweils erste Profilzone (48a, 48b; 48') des Profilbereiches (50, 50') an der radialen Außenseite des Anschlagdämpfers (14a, 14b, 14, 14a', 14b') des Anschlags (10, 10a, 10b, 10c, 10d) durch Haltebereichsumhüllungen (29) gebildet ist, und eine zweite Kontaktzone (47a, 47b; 47a', 47b') des Kontaktbereiches (45, 45') in Umfangsrichtung benachbart zur ersten Kontaktzone (46a, 46b, 46') an der radialen Innenseite der jeweiligen Tilgermasse (43, 43') vorgesehen ist, während die zweite Profilzone (49a, 49b; 49a', 49b') des Profilbereiches (50, 50') jeweils durch einem Befestigungsbereich (11) des Anschlagträgers (8, 8a, 8b, 8c, 8d) formlich angepasste Befestigungsbereichsumhüllungen (28) gebildet ist.

## Claims

1. Absorber system (1, 1a, 1b, 1c, 1d) having an absorber mass carrier (3, 3a, 3b) on which at least one absorber mass (43, 43') is accommodated so as to be movable relative thereto by means of coupling devices (41), which connect guide tracks (40a, 40b) in the absorber mass carrier (3, 3a, 3b) to guide tracks (42) in the at least one absorber mass (43, 43'), and having at least one stop (10, 10a, 10b, 10c, 10d), wherein the at least one absorber mass (43, 43') is arranged radially outside the stop (10, 10a, 10b, 10c, 10d), and, on its radial side facing the stop (10, 10a, 10b, 10c, 10d), is provided with a contact region (45, 45') which interacts with a profile region (50, 50'), which is provided on the stop (10, 10a, 10b, 10c, 10d), on the radial side thereof assigned to the at least one absorber mass (43, 43'), wherein the stop (10, 10a, 10b, 10c, 10d) has at least one stop carrier (8, 8a, 8b, 8c, 8d) as a first constructional unit (25, 25') and at least one stop damper (14a, 14b, 14, 14a', 14b'), which is connected to the stop carrier (8, 8a, 8b, 8c, 8d) via a radial securing means (23), as a second constructional unit (26a, 26b, 26, 26a', 26b'), **characterized in that** the radial securing means (23) is in each case assigned a pressure medium supply (18) which interacts with in each case one of the coupling devices (41).

2. Absorber system (1, 1a, 1b, 1c, 1d) according to Claim 1, **characterized in that** one of a plurality of constructional units (25, 25', 26a, 26b, 26, 26a', 26b'), i.e. either the stop damper (14a, 14b, 14, 14a', 14b') or the stop carrier (8, 8a, 8b, 8c, 8d) of the stop (10, 10a, 10b, 10c, 10d) or the absorber mass carrier (3, 3a, 3b), has at least one protrusion (22a, 22b, 22", 22b') with a direction of extent differing from the radial direction, said protrusion engaging in a correspondingly shaped recess (19a, 19b, 19a', 19b') of one of the other constructional units (25, 25', 26a, 26b, 26, 26a', 26b'), wherein the protrusion (22a, 22b, 22", 22b') and the recess (19a, 19b, 19a', 19b') each form components of the radial securing means (23).

3. Absorber system (1, 1a, 1b, 1c, 1d) according to Claim 2, **characterized in that** the protrusion (22a, 22b, 22", 22b') is provided on the constructional unit (26a, 26b, 26, 26a', 26b') which is effective as the stop damper (14a, 14b, 14, 14a', 14b') of the stop (10, 10a, 10b, 10c, 10d), and the recess (19a, 19b, 19a', 19b') is provided on the other constructional unit (25, 25') which is effective as the stop carrier (8, 8a, 8b, 8c, 8d) or as the absorber mass carrier (3, 3a, 3b), wherein the protrusion (22a, 22b, 22", 22b') penetrates with a free end (24a, 24b, 24, 24a', 24b'), which faces the recess (19a, 19b, 19a', 19b'), into the associated recess (19a, 19b, 19a', 19b').

4. Absorber system (1, 1a, 1b, 1c, 1d) according to at least one of Claims 1 to 3, **characterized in that** the radial securing means (23) has, per coupling device (41), a pair of protrusions (32a, 32b, 32, 32a', 32b') which, between them in the circumferential direction, has a pressure medium channel (17a, 17b, 17, 17a', 17b') which faces the associated coupling device (41) and is used as the pressure medium supply (18).

5. Absorber system (1, 1a, 1b, 1c, 1d) according to Claim 1, **characterized in that** the at least one stop carrier (8, 8a, 8b, 8c, 8d) is provided for fastening to the absorber mass carrier (3, 3a, 3b), and the at least one stop damper (14a, 14b, 14, 14a', 14b') is held axially between the absorber mass carrier (3, 3a, 3b) and the stop carrier (8, 8a, 8b, 8c, 8d) by means of the at least one stop carrier (8, 8a, 8b, 8c, 8d).

6. Absorber system (1, 1b, 1c, 1d) according to Claim 1 having an absorber mass carrier (3, 3a, 3b) which has at least two absorber mass carrier elements (4a, 4b, 4a', 4b') which are arranged with an axial offset with respect to one another and receive the stop (10, 10b, 10c, 10d) axially between them, **characterized in that** the at least one stop carrier (8, 8b, 8c, 8d) is assigned at least two stop dampers (14a, 14b, 14a', 14b'), wherein each of said stop dampers (14a, 14b, 14a', 14b') is in each case held axially between one of the absorber mass carrier elements (4a, 4b, 4a', 4b') and the stop carrier (8, 8b, 8c, 8d).

7. Absorber system (1, 1a, 1b, 1c, 1d) according to Claim 5 or 6, **characterized in that** the at least one stop carrier (8, 8a, 8b, 8c, 8d) for fastening to the absorber mass carrier (3, 3a, 3b) has at least one fastening region (11), and **in that** the at least one stop damper (14a, 14b, 14, 14a', 14b') has at least one fastening region covering (28) which is adapted in terms of shape to the at least one fastening region (11) of the stop carrier (8, 8a, 8b, 8c, 8d) and separates the at least one fastening region (11) of the stop carrier (8, 8a, 8b, 8c, 8d) from the contact region (45, 45') of the associated absorber mass (43, 43').

8. Absorber system (1, 1a, 1b, 1c, 1d) according to Claim 7, **characterized in that** the respective fastening region (28) of the stop carrier (8, 8a, 8b, 8c, 8d) serves for receiving at least one holding element (5, 5c).

9. Absorber system (1, 1a, 1b, 1c, 1d) according to Claim 1, **characterized in that** the at least one stop carrier (8, 8a, 8b, 8c, 8d) like the at least one stop damper (14a, 14b, 14, 14a', 14b') is in each case formed annularly.

10. Absorber system (1, 1a, 1b, 1c, 1d) according to Claim 1 having an absorber mass carrier (3, 3a, 3b) which has at least two absorber mass carrier elements (4a, 4b, 4a', 4b') which are arranged at an axial offset with respect to one another and accommodate the stop (10, 10a, 10b, 10c, 10d) axially between them, and having a stop (10, 10a, 10b, 10c, 10d), in which absorber system the at least one stop carrier (8, 8a, 8b, 8c, 8d) is composed of an at least substantially deformation-stable material and the at least one stop damper (14a, 14b, 14, 14a', 14b') is composed of an at least substantially deformation-prone material, **characterized in that** the at least one stop carrier (8, 8a, 8b, 8c, 8d) is effective as a spacer (52) between the absorber mass carrier elements (4a, 4b, 4a', 4b').

11. Absorber system (1, 1a, 1b, 1c, 1d) according to Claim 1, in which the contact region (45, 45') of the at least one absorber mass (43, 43'), on the radial side thereof facing the stop (10, 10a, 10b, 10c, 10d), has at least two contact zones (46a, 46b, 47a, 47b; 46', 47a', 47b'), and the profile region (50, 50') of the stop (10, 10a, 10b, 10c, 10d), on the radial side thereof assigned to the at least one absorber mass (43, 43'), has at least two profile zones (48a, 48b, 49a, 49b; 48', 49a', 49b'), **characterized in that** the in each case first contact zone (46a, 46b, 46') of the contact region (45, 45') on the radial inner side of the respective absorber mass (43, 43') and the in each case first profile zone (48a, 48b; 48') of the profile region (50, 50') on the radial outer side of the stop damper (14a, 14b, 14, 14a', 14b') of the stop (10, 10a, 10b, 10c, 10d) are formed by holding region coverings (29), and a second contact zone (47a, 47b; 47a', 47b') of the contact region (45, 45') is provided adjacent in the circumferential direction to the first contact zone (46a, 46b, 46') on the radial inner side of the respective absorber mass (43, 43'), while the second profile zone (49a, 49b; 49a', 49b') of the profile region (50, 50') is in each case formed by fastening region coverings (28) which are adapted in terms of shape to a fastening region (11) of the stop carrier (8, 8a, 8b, 8c, 8d).

## Revendications

1. Système absorbeur (1, 1a, 1b, 1c, 1d) comprenant un support de masse absorbante (3, 3a, 3b), sur lequel au moins une masse absorbante (43, 43') est reçue de manière relativement mobile au moyen d'appareils de couplage (41), qui relient des voies de guidage (40a, 40b) dans le support de masse absorbante (3, 3a, 3b) à des voies de guidage (42) dans l'au moins une masse absorbante (43, 43'), ainsi que comprenant au moins une butée (10, 10a, 10b, 10c, 10d), l'au moins une masse absorbante (43, 43') étant agencée radialement à l'extérieur de la butée (10, 10a, 10b, 10c, 10d), et étant pourvue, sur son côté radial tourné vers la butée (10, 10a, 10b, 10c, 10d), d'une région de contact (45, 45') qui coopère avec une région profilée (50, 50') prévue sur la butée (10, 10a, 10b, 10c, 10d) sur son côté radial associé à l'au moins une masse absorbante (43, 43'), la butée (10, 10a, 10b, 10c, 10d) présentant au moins un support de butée (8, 8a, 8b, 8c, 8d) en tant que première unité de construction (25, 25') et au moins un amortisseur de butée (14a, 14b, 14, 14a', 14b') relié au support de butée (8, 8a, 8b, 8c, 8d) par l'intermédiaire d'un assujettissement radial (23) en tant que deuxième unité de construction (26a, 26b, 26, 26a', 26b'), **caractérisé en ce qu'**une alimentation en fluide sous pression (18) est respectivement associée à l'assujettissement radial (23), qui coopère respectivement avec l'un des appareils de couplage (41).

2. Système absorbeur (1, 1a, 1b, 1c, 1d) selon la revendication 1, **caractérisé en ce que** l'une de plusieurs unités de construction (25, 25', 26a, 26b, 26, 26a', 26b'), c'est-à-dire soit l'amortisseur de butée (14a, 14b, 14, 14a', 14b'), soit le support de butée (8, 8a, 8b, 8c, 8d) de la butée (10, 10a, 10b, 10c, 10d), soit le support de masse absorbante (3, 3a, 3b) présente au moins une saillie (22a, 22b, 22'', 22b') ayant une direction d'extension qui dévie de la direction radiale, qui s'engage dans un évidement (19a, 19b, 19a', 19b') de forme correspondante de l'une des autres unités de construction (25, 25', 26a, 26b, 26, 26a', 26b'), la saillie (22a, 22b, 22'', 22b') ainsi que l'évidement (19a, 19b, 19a', 19b') formant respectivement des constituants de l'assujettissement radial (23).

3. Système absorbeur (1, 1a, 1b, 1c, 1d) selon la revendication 2, **caractérisé en ce que** la saillie (22a, 22b, 22'', 22b') est prévue sur l'unité de construction (26a, 26b, 26, 26a', 26b') agissant en tant qu'amortisseur de butée (14a, 14b, 14, 14a', 14b') de la butée (10, 10a, 10b, 10c, 10d) et l'évidement (19a, 19b, 19a', 19b') est prévu sur l'autre unité de construction (26a, 26b, 26, 26a', 26b') agissant en tant que support de butée (8, 8a, 8b, 8c, 8d) ou en tant que support de masse absorbante (3, 3a, 3b), la saillie (22a, 22b, 22'', 22b') pénétrant par une extrémité libre (24a, 24b, 24, 24a', 24b') tournée vers l'évidement (19a, 19b, 19a', 19b') dans l'évidement associé (19a, 19b, 19a', 19b').

4. Système absorbeur (1, 1a, 1b, 1c, 1d) selon au moins l'une quelconque des revendications 1 à 3, **caractérisé en ce que** l'assujettissement radial (23) présente, pour chaque appareil de couplage (41), une paire de saillies (32a, 32b, 32, 32a', 32b') qui disposent entre elles, dans la direction périphérique, d'un canal de fluide sous pression (17a, 17b, 17, 17a', 17b') orienté vers l'appareil de couplage (41) associé et servant d'alimentation en fluide sous pression (18).

5. Système absorbeur (1, 1a, 1b, 1c, 1d) selon la revendication 1, **caractérisé en ce que** l'au moins un support de butée (8, 8a, 8b, 8c, 8d) est prévu pour être fixé au support de masse absorbante (3, 3a, 3b), et l'au moins un amortisseur de butée (14a, 14b, 14, 14a', 14b') est maintenu axialement entre le support de masse absorbante (3, 3a, 3b) et le support de butée (8, 8a, 8b, 8c, 8d) au moyen de l'au moins un support de butée (8, 8a, 8b, 8c, 8d).

6. Système absorbeur (1, 1b, 1c, 1d) selon la revendication 1 comprenant un support de masse absorbante (3, 3a, 3b), qui dispose d'au moins deux éléments de support de masse absorbante (4a, 4b, 4a', 4b') agencés avec un décalage axial l'un par rapport à l'autre, qui reçoivent axialement entre eux la butée (10, 10b, 10c, 10d), **caractérisé en ce qu'**au moins deux amortisseurs de butée (14a, 14b, 14a', 14b') sont associés à l'au moins un support de butée (8, 8b, 8c, 8d), chacun de ces amortisseurs de butée (14a, 14b, 14a', 14b') étant maintenu axialement entre l'un des éléments de support de masse absorbante (4a, 4b, 4a', 4b') et le support de butée (8, 8b, 8c, 8d).

7. Système absorbeur (1, 1a, 1b, 1c, 1d) selon la revendication 5 ou 6, **caractérisé en ce que** l'au moins un support de butée (8, 8a, 8b, 8c, 8d) dispose d'au moins une région de fixation (11) pour être fixé au support de masse absorbante (3, 3a, 3b), et **en ce que** l'au moins un amortisseur de butée (14a, 14b, 14, 14a', 14b') présente au moins une enveloppe de région de fixation (28) dont la forme est adaptée à l'au moins une région de fixation (11) du support de butée (8, 8a, 8b, 8c, 8d), qui sépare l'au moins une région de fixation (11) du support de butée (8, 8a, 8b, 8c, 8d) de la région de contact (45, 45') de la masse absorbante (43, 43') associée.

8. Système absorbeur (1, 1a, 1b, 1c, 1d) selon la revendication 7, **caractérisé en ce que** la région de fixation (28) respective du support de butée (8, 8a, 8b, 8c, 8d) sert à recevoir au moins un élément de maintien (5, 5c).

9. Système absorbeur (1, 1a, 1b, 1c, 1d) selon la revendication 1, **caractérisé en ce que** l'au moins un support de butée (8, 8a, 8b, 8c, 8d) ainsi que l'au moins un amortisseur de butée (14a, 14b, 14, 14a', 14b') sont respectivement configurés sous forme annulaire.

10. Système absorbeur (1, 1a, 1b, 1c, 1d) selon la revendication 1 comprenant un support de masse absorbante (3, 3a, 3b), qui dispose d'au moins deux éléments de support de masse absorbante (4a, 4b, 4a', 4b') agencés avec un décalage axial l'un par rapport à l'autre, qui reçoivent axialement entre eux la butée (10, 10a, 10b, 10c, 10d), et comprenant une butée (10, 10a, 10b, 10c, 10d), dans lequel l'au moins un support de butée (8, 8a, 8b, 8c, 8d) est constitué d'un matériau au moins essentiellement résistant à la déformation et l'au moins un amortisseur de butée (14a, 14b, 14, 14a', 14b') est constitué d'un matériau au moins essentiellement apte à la déformation, **caractérisé en ce que** l'au moins un support de butée (8, 8a, 8b, 8c, 8d) agit en tant qu'espaceur (52) entre les éléments de support de masse absorbante (4a, 4b, 4a', 4b').

11. Système absorbeur (1, 1a, 1b, 1c, 1d) selon la revendication 1, dans lequel la zone de contact (45, 45') de l'au moins une masse absorbante (43, 43') dispose sur son côté radial tourné vers la butée (10, 10a, 10b, 10c, 10d) d'au moins deux zones de contact (46a, 46b, 47a, 47b ; 46', 47a', 47b') et la région profilée (50, 50') de la butée (10, 10a, 10b, 10c, 10d) dispose sur son côté radial associé à l'au moins une masse absorbante (43, 43') d'au moins deux zones profilées (48a, 48b, 49a, 49b ; 48', 49a', 49b'), **caractérisé en ce que** la première zone de contact respective (46a, 46b, 46') de la région de contact (45, 45') sur le côté intérieur radial de la masse absorbante (43, 43') respective et la première zone profilée respective (48a, 48b ; 48') de la région profilée (50, 50') sur le côté extérieur radial de l'amortisseur de butée (14a, 14b, 14, 14a', 14b') de la butée (10, 10a, 10b, 10c, 10d) sont formées par des enveloppes de région de maintien (29), et une deuxième zone de contact (47a, 47b ; 47a', 47b') de la région de contact (45, 45') est prévue dans la direction circonférentielle au voisinage la première zone de contact (46a, 46b, 46') sur le côté intérieur radial de la masse absorbante respective (43, 43'), tandis que la deuxième zone profilée (49a, 49b ; 49a', 49b') de la région profilée (50, 50') est formée respectivement par des enveloppes de région de fixation (28) dont la forme est adaptée à une région de fixation (11) du support de butée (8, 8a, 8b, 8c, 8d).
